# EUROPEAN PATENT APPLICATION

(11) **EP 4 645 262 A1**
(43) Date of publication of application: **05.11.2025**
(21) Application number: 24173317.9
(22) Date of filing: 30.04.2024
(51) Int. Cl.: G06V 20/58

(54) **VERIFYING THE PHYSICAL PRESENCE OF OBJECTS DETECTED IN IMAGES**

(71) Applicant: Robert Bosch GmbH, 70442 Stuttgart (DE)
(72) Inventor: Schmarje, Lars, 24220 Flintbek (DE); Zhang, Dan, 71229 Leonberg (DE)

(57) **Abstract**

A method (100) for verifying the presence of objects (3) detected in a scenery (1) based on at least one image (2) of this scenery (1), comprising the steps of:
• assigning (110), by a given object detector (4), at least one image region (2a) in the image (2) to an object (3) whose presence in the scenery (1) the image region (2a) indicates;
• obtaining (120) depth information (5) relating to this image region (2a), said depth information (5) being indicative of a distance between a sensor that was used to acquire the image (2) and a scenery region (1a) in the scenery (1) that corresponds to the image region (2a);
• determining (130) whether the depth information (5) comprises depth changes (5a*) that are to be expected given the presence of the object (3) assigned to the image region (2a) by the object detector (4); and
• if this determination is positive, determining (140) that the assignment of the image region (2a) to the object (3) by the object detector (4) is a valid detection (3*) of the object (3).

## Description

The present invention relates to image analysis, and in particular to the detection of objects in a scenery based on images taken of this scenery.

### Background

Autonomously maneuvering a vehicle or robot on company premises, or even in public road traffic, requires a constant monitoring of the surroundings of the vehicle and/or robot. Acquiring and analyzing images of these surroundings is a vital part of such monitoring. It is of particular importance that objects with which the vehicle and/or robot could collide are detected.

When objects are detected from visual cues, it is important that all objects which are physically present in the scenery and visible in the image are recognized as being objects. But visual cues may also be misleading, so that objects may be recognized where no object actually exists. If such a false detection occurs during automated driving, it may cause an evasion or emergency braking maneuver that may come as a complete surprise to other traffic participants and cause an accident.

### Disclosure of the invention

The invention provides a method for verifying the presence of objects detected in a scenery based on at least one image of this scenery. The image may be acquired using any modality, such as a still or video camera, or a thermal camera. The image may also be a multimodal image with pixels whose pixel values are amalgamated from measurement values captured using multiple modalities. In particular, the image may be a color image with pixels to which a plurality of intensities for basic colors of a given color space are assigned. That is, for each pixel, there is one intensity value for each basic color. Exemplary color spaces are RGB (red, green, blue) and CMYK (cyan, magenta, yellow and key = black).

In the course of the method, at least one image region in the image is assigned to an object whose presence in the scenery the image region indicates by a given object detector. That is, the object detector outputs that the region in the image contains an object instance, with or without a concrete identification of the type of object. The image region may, for example, be a bounding box that encloses the object instance plus a bit of background. But the image region may also be a more exact contour of the object instance that distinguishes the object instance from the background.

In the context of the present invention, an object is a physical entity that has a three-dimensional structure. In particular, an object may be an entity that stands on, or protrudes from, an otherwise flat surface. In the context of automated driving, such objects with which a vehicle or robot might collide are the predominantly relevant objects. For example, a human or an animal standing on the road are relevant objects. But painted road markings or manhole covers that are substantially flush with the road do not count as objects because a vehicle or robot may just drive over it.

Depth information relating to the image region is obtained. This depth information is indicative of a distance between a sensor that was used to acquire the image and a scenery region in the scenery that corresponds to the image region. That is, the depth information is not limited to exactly this distance, but may also be a quantity that is commensurate with this distance.

In particular, depth information may comprise one or more of:
- a monocular depth estimation from the image;
- depth information from a stereo camera; and/or
- depth information obtained by measuring a distance to the scenery using a beam of electromagnetic interrogation radiation.

In particular, in automated driving use cases, sensors for measuring distance with radar or lidar interrogation radiation are already present on the vehicle. This means that such an existing sensor may be re-used, reducing the cost of implementing the method on the vehicle.

Therefore, advantageously, depth information is obtained from at least one sensor that is carried by a same vehicle from which the image has been acquired. That is, this vehicle may carry both the sensor that was used to acquire the image and the sensor for the depth information.

It is determined whether the depth information comprises depth changes that are to be expected given the presence of the object assigned to the image region by the object detector. That is, if the object is really present in the scenery in the place indicated by the detection in the image, then it inevitably produces depth changes. This means that, if these depth changes are missing in the depth information, the object cannot be present in the scenery, at least not in the place indicated by the detection of the object instance in the image region.

Therefore, if it is determined that the expected depth changes are present, then it is determined that the assignment of the image region to the object by the object detector is a valid detection of the object. Herein, the determining whether expected depth changes are present may comprise both a qualitative determining whether depth changes are present at all and a quantitative determining of the amount of depth changes.

For example, for parts of the image relating to a faraway scenery or portion thereof, there are only little depth changes. For a near scenery or portion thereof, there may be many more depth changes. For example, a road surface area may exhibit depth changes on every pixel in the region of interest. So the indication of objects may, for example, be tied to the presence of a few localized depth changes.

It was found that the depth information is a particularly advantageous tool to resolve ambiguities regarding whether a visual cue in an image indicates the presence of an actual object, or whether the visual cue merely comprises texture and/or color changes on an objectless surface. The depth information provides geometric cues that provide a more holistic view and complement the visual (appearance) cues.

In particular, in automated driving applications, roads frequently exhibit features that may be mistaken for objects. For example, roads comprise many markings, such as lines delimiting lanes, speed limits, prescribed directions of travel for a lane, instructions regarding right of way, instructions regarding who may use the lane, and even unofficial markings such as graffiti. Also, there are manhole covers and other devices that are flush with the road surface. Furthermore, the road itself may exhibit texture changes because the composition of the road surface changes. For example, a road built some time ago may have been dug open and then closed with new tarmac that has a different texture, or potholes may have been mended with temporary asphalt that has yet another texture.

There are even more sources for potential false object detections in automated driving applications. For example, a bus may carry an advertisement that shows a scenery distinct from the actual physical scenery, such as a family marvelling a brand new car. Neither the family members nor the car shown in the advertisement should be recognized as actual objects even if they are rendered in a perspective that suggests this. Such false detections might cause false reactions by a downstream system, such as evasion or emergency braking, that are undesirable because other traffic participants do not expect them.

That is, depth information is particularly suitable to determine whether visual cues that indicate the presence of an object actually belong to an "object" that is a potential collision target, or whether they relate to something that can be safely ignored for the purposes of automated driving. In particular, not everything that is somehow distinct from the road surface is an object. For example, the flush manhole cover is very distinct from the road surface, but it is not an object with which a vehicle or robot might collide.

The filtering by depth information is robust. Depth information becomes inaccurate in far distance. But this is not a problem, as when there is no depth change, the objects will not be filtered out. So, there we will not reduce the recall. So this filtering mechanism is most effect for near range objects (whose false-positive detection can be more dangerous).

In a particularly advantageous embodiment, an operator that highlights depth changes is applied to the depth information such that, the more drastic a depth change is, the more it is highlighted. This further serves to distinguish depth changes caused by the presence of objects from steady depth changes caused by the perspective between the camera and the ground. The steady depth changes indicate a flat surface that is, in the context of automated driving, a drivable surface. More drastic depth changes indicate the presence of an object that protrudes from, or stands on, a flat surface.

That is, in a further particularly advantageous embodiment, the operator is configured to distinguish consistent depth gradients of flat surfaces from more significant depth changes protruding from these surfaces.

Examples of operators that highlight depth changes more if they are already more drastic include derivative operators and a Sobel operator. The Sobel operator is a convolutional edge detection filter that computes a first derivative of pixel values, while at the same time smoothing in a direction perpendicular to the direction in which the derivative is computed. In particular, the outcome of applying the Sobel operator may comprise a gradient image that highlights edges of the original image.

In a further particularly advantageous embodiment, the image is divided into pixels. The depth information comprises a depth map. This depth map assigns, to each pixel of the image region, a value that is indicative of a distance between the sensor and a location in the scenery represented by the respective pixel. That is, the value need not be exactly this distance; rather, it only needs to be commensurate with this distance. The depth map then adds a notion of the third dimension to the original two-dimensional image. It can be perceived as a depth image corresponding to the original image.

Consequently, image processing operators may be applied to the depth map to improve its quality. In a further particularly advantageous embodiment, a morphological closing operator is applied to the depth map. For example, such a morphological closing operator may comprise a dilation operation with a kernel of a predetermined size, followed by an erosion operation with a kernel or a predetermined size. The morphological closing operation serves to close any potential holes, ensuring a more consistent and reliable depth representation, especially in stereo depth maps.

In a further particularly advantageous embodiment, the expected depth changes comprise
- a summary score that is indicative of a total amount of depth change in a bounding box that the object detector has assigned to the object, and/or
- a spatial distribution and/or profile of depth changes that is to be expected given the presence of the object.

These quantities can be easily compared with the respective actual depth changes in the depth information, so that a decision as to whether they are in agreement may be easily made, e.g., by thresholding.

In a particularly advantageous embodiment, in response to determining that, out of a bounding box that the object detector has assigned to the object, a proportion whose depth changes are below a first threshold value is larger than a second threshold value, it is determined that the depth changes are to be expected given the presence of the object. It was found that the actual presence of an object is tied to the presence of few local depth changes. Also, since depth changes can only be detected within a certain distance, the detections in far distance have a proportion of small depth changes close to its maximum and are always kept. The filtering thus mostly affects close objects. This is of practical interest, as closer objects are more relevant to the planning of the next action in a downstream system. In particular, this is true for the use case of automated driving of vehicles and/or robots.

In a further particularly advantageous embodiment, the method further comprises determining, based at least in part on one or more objects whose presence has been verified using depth information, a representation of the scenery. Such a representation is used by many downstream systems for planning respective next actions. In particular, this applies to the use case of automated driving where the representation is used for planning a future trajectory for a predetermined time horizon.

Therefore, in a further particularly advantageous embodiment, based on the representation of the scenery, an actuation signal is computed. A vehicle, a robot, a driving assistance system, a robot, a quality inspection system, a surveillance system, and/or a medical imaging system, is actuated with the actuation signal. Because false object detections are filtered, the probability that the action performed by the respective actuated technical system in response to the actuation signal is appropriate in the situation characterized by the image is improved. In particular, no inappropriate actions are taken in response to false object detections.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In the following, the invention will be described using Figures without any intention to limit the scope of the invention.

### Description of the Figures

Figure 1: Exemplary embodiment of the method 100 for verifying the presence of objects 3 in a scenery 1;
Figure 2: Exemplary visualization of obtaining geometric cues for the actual presence of objects 3 in a scenery 1 by means of depth information 5;
Figure 3: Examples of images that give rise to false object detections.

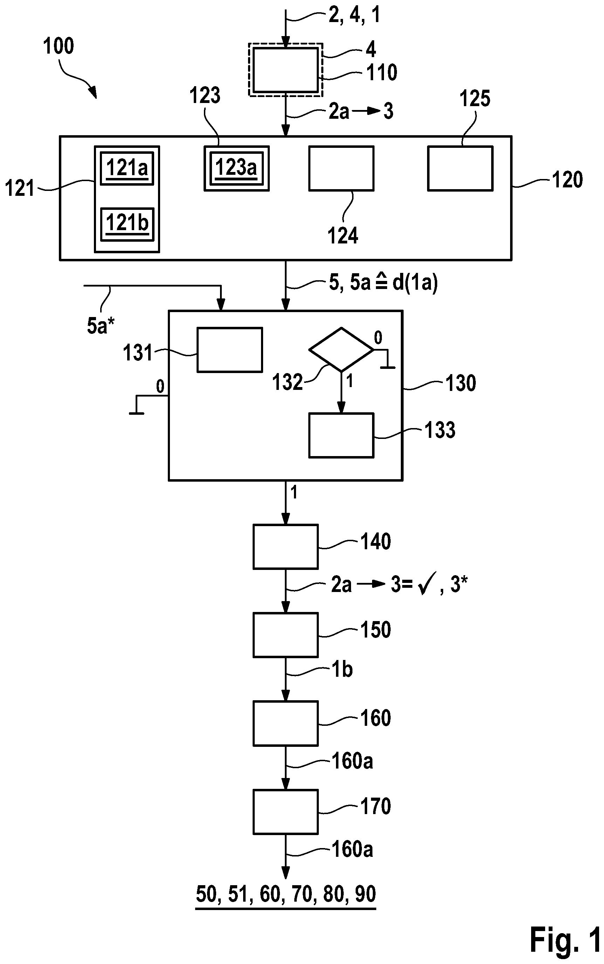

Figure 1 is a schematic flow chart of an embodiment of the method 100 for verifying the presence of objects 3 detected in a scenery 1 based on at least one image 2 of this scenery 1.

In step 110, a given object detector 4 assigns at least one image region 2a in the image 2 to an object 3 whose presence in the scenery 1 the image region 2a indicates.

In step 120, depth information 5 relating to this image region 2a is obtained. This depth information 5 is indicative of a distance d between a sensor that was used to acquire the image 2 and a scenery region 1a in the scenery 1 that corresponds to the image region 2a.

According to block 121, an operator that highlights depth changes 5a may be applied to the depth information 5 such that, the more drastic a depth change 5a is, the more it is highlighted.

According to block 121a, this operator may be configured to distinguish consistent depth gradients of flat surfaces from more significant depth changes protruding from these surfaces.

According to block 121b, the operator may comprise a derivative operator, and/or a Sobel operator.

According to block 123, the depth information 5 may comprise a depth map that assigns, to each pixel of the image region 2a, a value that is indicative of a distance between the sensor and a location in the scenery 1 represented by the respective pixel.

According to block 123a, a morphological closing operator may be applied to the depth map.

According to block 124, the depth information 5 may comprise one or more of:
- a monocular depth estimation from the image 2;
- depth information 5 from a stereo camera; and/or
- depth information 5 obtained by measuring a distance to the scenery using a beam of electromagnetic interrogation radiation.

According to block 125, the depth information 5 may be obtained from at least one sensor that is carried by a same vehicle from which the image 2 has been acquired.

In step 130, it is determined whether the depth information 5 comprises depth changes 5a* that are to be expected given the presence of the object 3 assigned to the image region 2a by the object detector 4.

According to block 131, the expected depth changes 5a* may comprise
- a summary score that is indicative of a total amount of depth change 5a in a bounding box that the object detector 4 has assigned to the object 3, and/or
- a spatial distribution and/or profile of depth changes 5a that is to be expected given the presence of the object 3.

According to block 132, it may be determined whether, out of a bounding box that the object detector 4 has assigned to the object 3, a proportion whose depth changes 5a are below a first threshold value is larger than a second threshold value. If this is the case (truth value 1), according to block 133, it may then be determined that the depth changes 5a are to be expected given the presence of the object 3.

In step 140, if the depth information 5 does comprise the expected depth changes (truth value 1), it is determined that the assignment of the image region 2a to the object 3 by the object detector 4 is a valid detection 3* of the object 3.

In the example shown in Figure 1, in step 150, based at least in part on one or more objects 3 whose presence has been verified using depth information 5 (i.e., valid detections 3*), a representation 1b of the scenery 1 is determined.

In step 160, based on the representation 1b of the scenery 1, an actuation signal 160a is computed.

In step 170, a vehicle 50, a driving assistance system 51, a robot 60, a quality inspection system 70, a surveillance system 80, and/or a medical imaging system 90, is actuated with the actuation signal 160a.

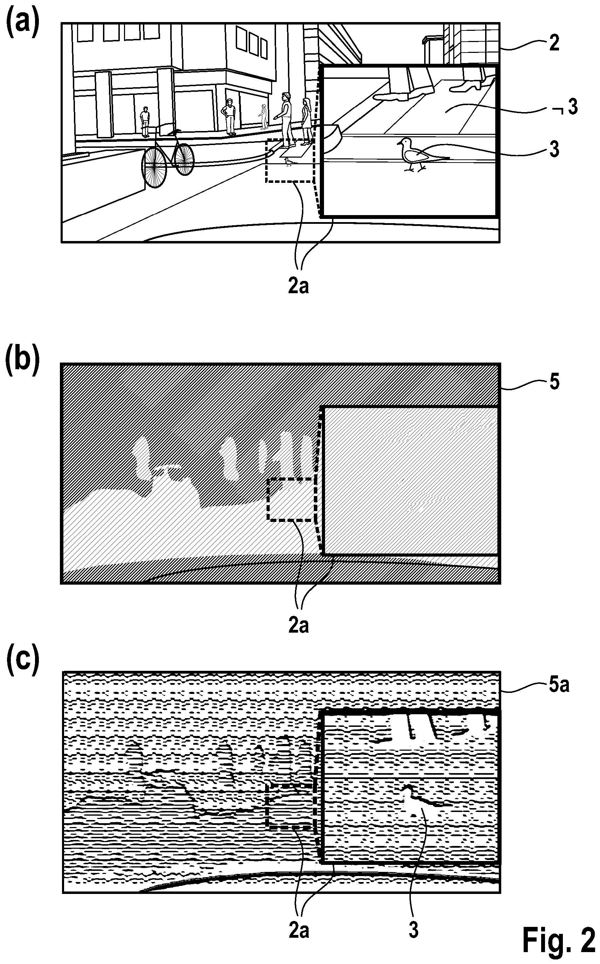

Figure 2 illustrates how detection of an object 3 may be verified using depth information 5. In all three partial images (a), (b) and (c), the region 2a of interest in the dashed box is shown in an enlarged inset in a solid box.

Figure 2a is an image 2 of a road scenery 1. The region 2a of interest shows a road marking that is not an object (shown by the reference sign -,3) protruding from the road surface, as well as a bird that is such a protruding object 3. Figure 2b shows depth information 5 corresponding to the image 2 shown in Figure 2a. Figure 2c shows depth changes 5a that have been derived from the depth information 5 shown in Figure 2b.

It is clearly visible that the bird 3 produces corresponding depth changes 5a, whereas the road marking _{¬}3 produces no depth changes 5a. Therefore, the depth changes 5a are suitable to distinguish the bird 3 from the road marking _{¬}3. A false detection of the road marking _{¬}3 as an object 3 can thus be avoided.

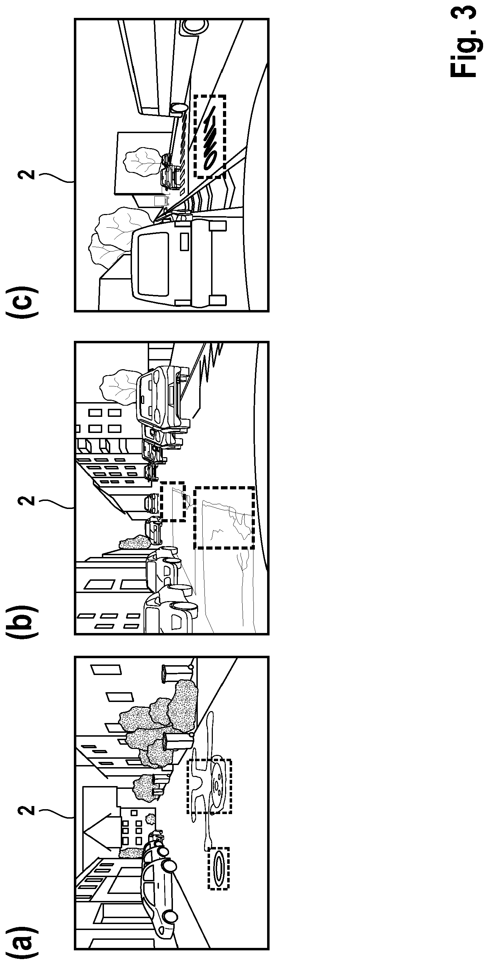

Figure 3 gives some examples of images 2 of road scenes that give rise to false object detections. Bounding boxes for these false detections are drawn in dashed lines.

In Figure 3a, which is taken from the Fishyscapes dataset, a manhole cover that is flush with the road surface, and a graffito painted on the road surface, give rise to false detections.

In Figure 3b, which is taken from the Cityscapes dataset, subtle texture changes in the road resulting from road surface repair give rise to false detections.

In Figure 3c, which is taken from the BDD100K dataset, a road marking gives rise to a false detection.

## Claims

1. A method (100) for verifying the presence of objects (3) detected in a scenery (1) based on at least one image (2) of this scenery (1), comprising the steps of:
• assigning (110), by a given object detector (4), at least one image region (2a) in the image (2) to an object (3) whose presence in the scenery (1) the image region (2a) indicates;
• obtaining (120) depth information (5) relating to this image region (2a), said depth information (5) being indicative of a distance between a sensor that was used to acquire the image (2) and a scenery region (1a) in the scenery (1) that corresponds to the image region (2a);
• determining (130) whether the depth information (5) comprises depth changes (5a*) that are to be expected given the presence of the object (3) assigned to the image region (2a) by the object detector (4); and
• if this determination is positive, determining (140) that the assignment of the image region (2a) to the object (3) by the object detector (4) is a valid detection (3*) of the object (3).

2. The method (100) of claim 1, wherein an operator that highlights depth changes (5a) is applied (121) to the depth information (5) such that, the more drastic a depth change (5a) is, the more it is highlighted.

3. The method (100) of claim 2, wherein the operator is configured (121a) to distinguish consistent depth gradients of flat surfaces from more significant depth changes protruding from these surfaces.

4. The method (100) of any one of claims 2 or 3, wherein the operator comprises (121b) a derivative operator, and/or a Sobel operator.

5. The method (100) of any one of claims 1 to 4, wherein the image (2) is divided into pixels, and the depth information (5) comprises (123) a depth map that assigns, to each pixel of the image region (2a), a value that is indicative of a distance between the sensor and a location in the scenery (1) represented by the respective pixel.

6. The method (100) of claim 5, further comprising applying (123a) a morphological closing operator to the depth map.

7. The method (100) of any one of claims 1 to 6, wherein the expected depth changes (5a*) comprise (131)
• a summary score that is indicative of a total amount of depth change (5a) in a bounding box that the object detector (4) has assigned to the object (3), and/or
• a spatial distribution and/or profile of depth changes (5a) that is to be expected given the presence of the object (3).

8. The method (100) of any one of claims 1 to 7, wherein, in response to determining (132) that, out of a bounding box that the object detector (4) has assigned to the object (3), a proportion whose depth changes (5a) are below a first threshold value is larger than a second threshold value, it is determined (133) that the depth changes (5a) are to be expected given the presence of the object (3).

9. The method (100) of any one of claims 1 to 8, wherein the depth information (5) comprises (124) one or more of:
• a monocular depth estimation from the image (2);
• depth information (5) from a stereo camera; and/or
• depth information (5) obtained by measuring a distance to the scenery using a beam of electromagnetic interrogation radiation.

10. The method (100) of any one of claims 1 to 9, wherein the depth information (5) is obtained (125) from at least one sensor that is carried by a same vehicle from which the image (2) has been acquired.

11. The method (100) of any one of claims 1 to 10, further comprising: determining (150), based at least in part on one or more objects (3) whose presence has been verified using depth information (5), a representation (1b) of the scenery (1).

12. The method (100) of claim 11, further comprising:
• determining (160), based on the representation (1b) of the scenery (1), an actuation signal (160a), and
• actuating (170) a vehicle (50), a driving assistance system (51), a robot (60), a quality inspection system (70), a surveillance system (80), and/or a medical imaging system (90), with the actuation signal (160a).

13. A computer program, comprising machine-readable instructions that, when executed by one or more computers and/or compute instances, cause the one or more computers and/or compute instances to perform the method (100) of any one of claims 1 to 12.

14. A non-transitory machine-readable storage medium, and/or a download product, with the computer program of claim 13.

15. One or more computers and/or compute instances with the computer program of claim 13, and/or with the non-transitory machine-readable storage medium and/or download product of claim 14.

## Amended claims

### Amended claims in accordance with Rule 137(2) EPC.

1. A method (100) for verifying the presence of objects (3) detected in a scenery (1) based on at least one image (2) of this scenery (1), comprising the steps of:
• assigning (110), by a given object detector (4), at least one image region (2a) in the image (2) to an object (3) whose presence in the scenery (1) the image region (2a) indicates, wherein this assigning comprises that the object detector (4) outputs that the region (2a) in the image (2) contains an object (3) instance, with or without a concrete identification of the type of object (3);
• obtaining (120) depth information (5) relating to this image region (2a), said depth information (5) being indicative of a distance between a sensor that was used to acquire the image (2) and a scenery region (1a) in the scenery (1) that corresponds to the image region (2a);
• determining (130) whether the depth information (5) comprises depth changes (5a*) that are to be expected given the presence of the object (3) assigned to the image region (2a) by the object detector (4); and
• if this determination is positive, determining (140) that the assignment of the image region (2a) to the object (3) by the object detector (4) is a valid detection (3*) of the object (3).

2. The method (100) of claim 1, wherein an operator that highlights depth changes (5a) is applied (121) to the depth information (5) such that, the more drastic a depth change (5a) is, the more it is highlighted.

3. The method (100) of claim 2, wherein the operator is configured (121a) to distinguish consistent depth gradients of flat surfaces from more significant depth changes protruding from these surfaces.

4. The method (100) of any one of claims 2 or 3, wherein the operator comprises (121b) a derivative operator, and/or a Sobel operator.

5. The method (100) of any one of claims 1 to 4, wherein the image (2) is divided into pixels, and the depth information (5) comprises (123) a depth map that assigns, to each pixel of the image region (2a), a value that is indicative of a distance between the sensor and a location in the scenery (1) represented by the respective pixel.

6. The method (100) of claim 5, further comprising applying (123a) a morphological closing operator to the depth map.

7. The method (100) of any one of claims 1 to 6, wherein the expected depth changes (5a*) comprise (131)
• a summary score that is indicative of a total amount of depth change (5a) in a bounding box that the object detector (4) has assigned to the object (3), and/or
• a spatial distribution and/or profile of depth changes (5a) that is to be expected given the presence of the object (3).

8. The method (100) of any one of claims 1 to 7, wherein, in response to determining (132) that, out of a bounding box that the object detector (4) has assigned to the object (3), a proportion whose depth changes (5a) are below a first threshold value is larger than a second threshold value, it is determined (133) that the depth changes (5a) are to be expected given the presence of the object (3).

9. The method (100) of any one of claims 1 to 8, wherein the depth information (5) comprises (124) one or more of:
• a monocular depth estimation from the image (2);
• depth information (5) from a stereo camera; and/or
• depth information (5) obtained by measuring a distance to the scenery using a beam of electromagnetic interrogation radiation.

10. The method (100) of any one of claims 1 to 9, wherein the depth information (5) is obtained (125) from at least one sensor that is carried by a same vehicle from which the image (2) has been acquired.

11. The method (100) of any one of claims 1 to 10, further comprising: determining (150), based at least in part on one or more objects (3) whose presence has been verified using depth information (5), a representation (1b) of the scenery (1).

12. The method (100) of claim 11, further comprising:
• determining (160), based on the representation (1b) of the scenery (1), an actuation signal (160a), and
• actuating (170) a vehicle (50), a driving assistance system (51), a robot (60), a quality inspection system (70), a surveillance system (80), and/or a medical imaging system (90), with the actuation signal (160a).

13. A computer program, comprising machine-readable instructions that, when executed by one or more computers and/or compute instances, cause the one or more computers and/or compute instances to perform the method (100) of any one of claims 1 to 12.

14. A non-transitory machine-readable storage medium, and/or a download product, with the computer program of claim 13.

15. One or more computers and/or compute instances with the computer program of claim 13, and/or with the non-transitory machine-readable storage medium and/or download product of claim 14.
